(19) Europäisches Patentamt
European Patent Office
Office européen des brevets

(11) **EP 0 938 062 A2**

(12) **EUROPEAN PATENT APPLICATION**

(43) Date of publication:
25.08.1999 Bulletin 1999/34

(51) Int. Cl.⁶: $G06T\ 5/20$

(21) Application number: 99101242.8

(22) Date of filing: 22.01.1999

(84) Designated Contracting States:
AT BE CH CY DE DK ES FI FR GB GR IE IT LI LU
MC NL PT SE
Designated Extension States:
AL LT LV MK RO SI

(30) Priority: 18.02.1998 US 25385

(71) Applicant: Xerox Corporation
Rochester, New York 14644 (US)

(72) Inventors:
• Ju, Xuan
Toronto, Ontario M5T 1K5 (CA)
• Black, Michael J.
Menlo Park, California 94025 (US)

(74) Representative:
Grünecker, Kinkeldey,
Stockmair & Schwanhäusser
Anwaltssozietät
Maximilianstrasse 58
80538 München (DE)

(54) **Filters for video sequences**

(57)    A method and apparatus for processing a temporal sequence of images in a video document particularly sensitive to relative item movement, transforms the relative items with selected dynamic processing lenses. A display device displays the video document image frames to an operator. A lens manager interposed between the storage device and display device includes the various dynamic processing lenses. A user interface selects the desired dynamic processing lenses and the location for application of the lens to the image frame.

The processing lens includes a motion information processor sensitive to the operator designated characteristic associated with item movement through the sequence of image frames. The motion information processor transforms pixel data of the user designated characteristic to vary the displaying of the characteristics through the sequence of the image frames in accordance with the user selection.

FIG. 1

## Description

## Background of the Invention

The invention pertains to the art of image processing and, more particularly, to a processing lens for digital images (video documents) for transforming a selected portion of the image that exhibits relative movement over time. However, it will be appreciated to those skilled in the art that the invention can be readily adapted for use in other environments as, for example, where similar lens processing devices and methods are employed to transform or adjust data items varying over time.

Various digital image processing techniques are well known for manipulating static images which are displayed on a display device, such as the screen of a personal computer. The processing devices are often referred to as a "filter" or "lens". A "lens" is essentially a transforming processor of the pixel data, usually comprising software applied to a spatially limited region of an image (although it might be the entire image) so that the data within the region is visually transformed on a display device. For example, a magnifying lens acts like a magnifying glass and will enlarge the image portion it covers. A lens can also be sensitive to the structure of the data in the region. For example, if the data is a rendered graphics image, the lens can be sensitive to something about the underlying graphics parameters, like a color. Another common property of lenses is that their effects can be combined by putting one lens over another to compose a cumulative effect on the underlying data.

The simplest type of lens operates on the image as a signal and produces a different, filtered, version of the image within the designated region. Such filtering lenses (Pandolfi, EP Application 0 544 509 82) make no reference to dynamic video, image sequences, motion, tracking, stabilization, temporal filtering, etc. In fact, such simple filtering lacks the ability to refer to or exploit any underlying structure in the image.

Xerox Corp. has successfully introduced a series of image processors referred to as "Magic Lenses", which are sensitive to the underlying structure in a static image. Such lenses are appropriate for graphical or computer-generated data where the underlying structure is known, and differ from simple filtering lenses in that the Magic Lenses can apply to an underlying model rather than to a signal.

Video is an increasingly important document type used for documentation of meetings, user studies and for various kinds of security and scientific surveillance. Its use in documents is likewise increasing as multi-media documents become more common. However, unlike text documents, very few tools are known for editing, searching and manipulating video documents. Tools for manipulating video are fundamentally different from tools used for manipulating static images because video images are not static. Video editing and viewing tools must be sensitive to the dynamic nature of video documents. Video lenses have a need to compute and exploit images that change over time as a result of motion. The ability to effect desired processing with recognition of the underlying motion information is, of course, the key to success for any viable video lens.

Motion can come into play when analyzing video documents in three primary ways.

First, when the motion is what is important. In this case, the user is interested in how some element, or elements, of the scene are moving. A desired object that one wants to be viewed while it is moving is analyzed for its motion over time.

Second, when the motion is unwanted. In this case, the user is trying to analyze some element in the video, but either it is moving (e.g., a car or person) or the camera is moving.

Third, when only certain motions are important. When viewing a long video, the user might only be interested in detecting particular motion events or changes in events. For example, when someone walks into the field of view of the camera, and the rest of the video is of no interest.

The present invention provides a new and improved device and method utilizing a sensitivity to relative motion in a video document for the successful editing, searching and manipulating of the video document.

## Brief Summary of the Invention

In accordance with the present invention, dynamic video sequences are provided that are capable of modifying pixel data in a manner predicated upon a sensitivity to the structure of that data. Three principal types of video lenses are described. A tracking lens computes the motion within the region of the image it covers and moves the lens automatically according to the estimated and detected motion. This type of lens can be combined with, for example, static lenses to magnify a region as it moves. A stabilization lens is useful to stabilize a region of interest designated by the lens so that it does not move. Frequently, some piece of image data is moving in a manner that is very difficult to observe. The stabilization lens accomplishes its purpose by recovering the motion of a region covered by a lens and then warping the image sequence by the estimated motion so that the image points within the lens do not move. A temporal filtering lens forms a smoothing or change detection over some temporal window. The traditional notion of a lens is one that acts over some spacial region of the image to change the appearance of the image in some way. With video, the image has an additional dimension corresponding to time, and hence a lens necessarily has a temporal extent. The filtering of an underlying structure over the course of the temporal extent is accomplished by a temporal filtering lens. A more sophisticated type of temporal lens allows automatic editing of video by only showing the user those frames where some event takes place, while filtering out those frames that are not of interest.

In accordance with the present invention, the subject image processing system for a video document comprises a storage device for holding a sequence of image frames including representations of relative item movement and a display device for displaying the image frames to a user. A lens manager is interposed between the storage device and display device including the subject dynamic processing lenses for selective processing of the item movement. A user interface selects a dynamic processing lens and applies the lens to the subject image frames. The processing lens includes a motion information processor sensitive to a user designated characteristic associated with the item movement through the sequence of image frames and transforms pixel data associated with the user designated characteristic to vary the displaying of the characteristic through the sequence of image frame.

In accordance with a more limited aspect of the present invention, the video lens can be combined with an overlapping static lens for a composition comprised of the cumulative effect of the static lens and the dynamic lens.

In accordance with yet another aspect of the present invention, the motion information processor includes a constant velocity model processor, an affine motion model processor and a planar motion model processor. The constant velocity model processor includes a correlation method processor, while the affine motion processor and the planar motion model processor includes an area based method processor.

In accordance with the present invention, a method is also provided for processing a sequence of data frames by referring to an identifiable content in the data frames exhibiting a relative movement through the sequence and for transforming the identifiable content with a processing lens throughout the display of the sequence. The method comprises steps of displaying a first part of the sequence in a display device as a scene display. A selected portion of the scene display containing the identifiable content is designated as a subject for the processing lens. The remaining part of the sequence displayed on the display including the pixel data comprising the identifiable content is processed with the processing lens to adjust the display of the sequence in accordance with the processing lens.

One benefit obtained by use of the present invention is the provision of a document processing system including a dynamic lens for manipulating a video document in a manner wherein the lens is sensitive to an underlying structure exhibiting a relative movement throughout the video document.

Another benefit obtained from the present invention is an editing, searching and manipulating tool for processing data varying over time, wherein the data exhibits a common characteristic recognizable by the system throughout the time of play.

A further benefit of the invention is a method and device for dynamic video processing which can be combined with preexisting static document processing for improved cumulative processing of a video document.

Other benefits and advantages of the subject new method and apparatus will become apparent to those skilled in the art upon a reading and understanding of this specification.

## Brief Description of the drawings

The invention may take physical form in certain parts and steps and arrangements of parts and steps, the preferred embodiments of which will be described in detail in the specification and illustrated in the accompanying drawings which form a part hereof and wherein:

FIGURE 1 is a block diagram of a system formed in accordance with the present invention;
FIGURE 2 is an illustration of a display screen viewed by a user when implementing the invention;
FIGURE 3a-3c are a set of three image frames illustrating two types of video tracking lenses;
FIGURES 4a and 4b are an illustration of two frames illustrating a stabilizing lens;
FIGURES 5a-5e illustrate a plurality of frames displayed in accordance with the temporal filtering lens; and,
FIGURE 6 is a flow chart illustrating the method practiced in accordance with the subject invention.

## Detailed Description of the Invention

Turning now to the drawings, wherein the showings are for purposes of illustrating the preferred embodiments of the invention, and not for purposes of limiting same, the proposed method and apparatus for implementing dynamic video lenses extends the notion of static filtering to a temporal dimension, so that the lenses can be sensitive to computed image motion and structure. The use of a particular motion or structural model that is selected is computed from an image sequence using motion estimation techniques. This relative motion can be thought of as a form of structural model that underlies the image data. It is the identification and processing of this relative motion which is essential for manipulating video documents in a commercially viable way.

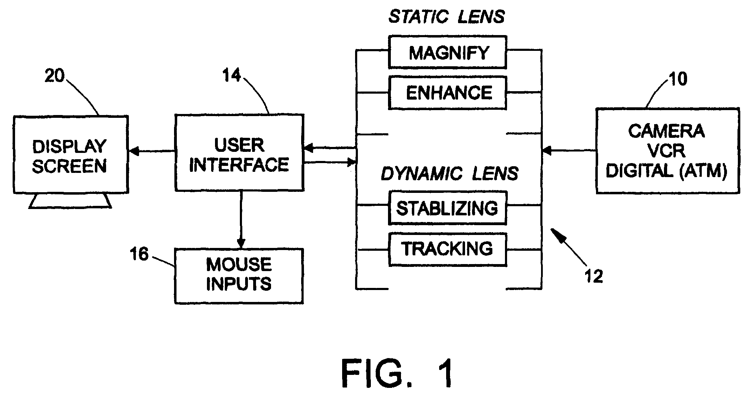

With particular reference to FIGURE 1, a video document comprised of a sequence of image frames is generated from a source **10**, such as a camera, a VCR or other digital asynchronous transfer mode communicator. The video document is in a digital signal form susceptible for processing by a lens manager **12**, comprising a plurality of static lenses and dynamic lenses, all functioning as computational filters for transforming the signal in selected manners. A user interface **14** receives commands from an operator through a conventional key board or mouse system **16**, and the video document is ultimately displayed on a display screen **20**. The user interface **14** identifies the portion of the video document to which the lens will be applied and also which lens is to be applied thereto. It is within the scope of the invention, as will be described in greater detail below, to overlap the lenses for a composing effect on the document.

The lens manager is seen to contain a variety of static lenses and dynamic lenses. As presently implemented, eight types of static lenses can be employed, all of which are conventionally known. A static lens takes an image region designated by the user interface as a signal and returns a filtered image. The eight types of static lenses employed in the current embodiment comprise a reverse-video lens, an image upper/lower threshold lens (both having one threshold parameter), an edge detecting lens (applies a Sobel edge detection method), a magnifying lens (with a zoom parameter), a reduced gray scale resolution lens (with a resolution parameter), a smoothing lens (applies a Gaussian filtering with a kernel sized parameter), a histogram equalization lens, and an enhancement lens (applies a high-pass filtering). This type of lens and its operation is disclosed in detail in U.S. Patent No. 5,479,603, which is commonly assigned and incorporated herein by reference.

The lens manager **12** also includes the various dynamic lenses noted above comprising a stabilizing lens, a tracking lens and a temporal filtering lens.

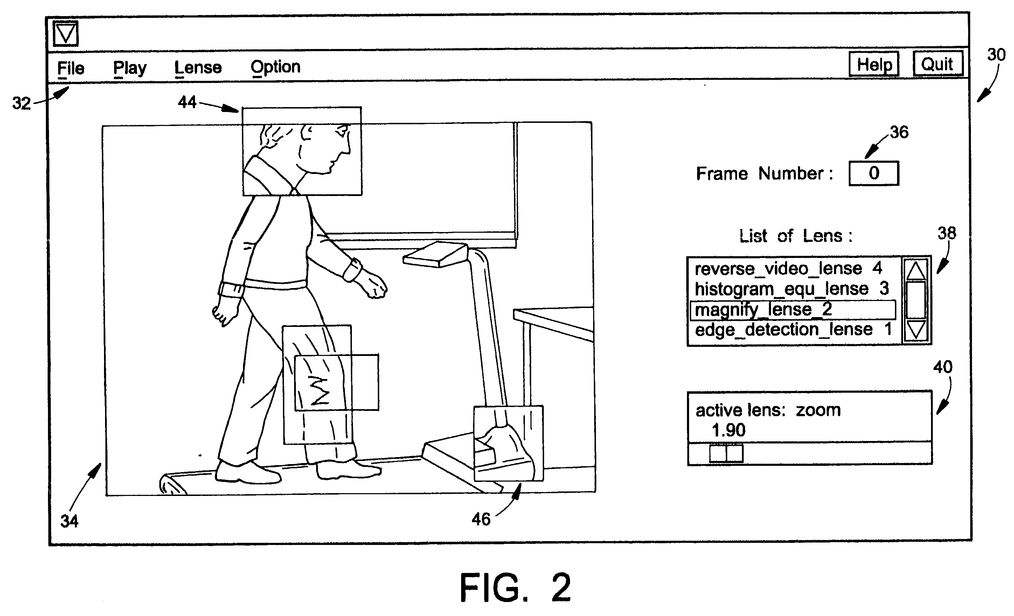

With reference to FIGURE 2, the control display seen by the user in implementing the subject invention is shown. The interface display **30** is comprised of five main parts: menu bar **32**, video document and lens display area **34**, frame counter **36**, lens list **38**, and active lens parameter controller **40**. The lens list comprises a list of both static and dynamic lenses, preferably selected by the mouse pointer (not shown). The video document **34** is illustrated as including a plurality of selectively sizable windows **44, 46**, corresponding to particular lenses. Window **44** corresponds to the magnifying lens. The active lens parameter controller sets the magnification factor for the active magnifying lens. Thus, the lens system comprised of the video, lens list and active lens parameter controller performs functions of creating and destroying windows **44, 46**, moving, resizing, raising and lowering the windows, and selecting, unselecting and grouping the lenses in the lens list **38**. The formation, dispositional control and sizing of the windows is conventional. Various lens default options are also provided, for example, window size, border color, border width, tracking, trace colors, etc. The menu bar **32** provides various video control functions, for example, play, stop, repeat, reverse, previous frame, next frame, first frame, etc.

As noted above, it is a novel aspect of the invention to group both static lenses and dynamic lenses to facilitate manipulation and editing of the video document, and the numbers and types of static and dynamic lenses can vary with the desires of the operator. However, it is the provision and inclusion of the dynamic lenses in the lens list **38** which provides the particular novelty of the subject invention.

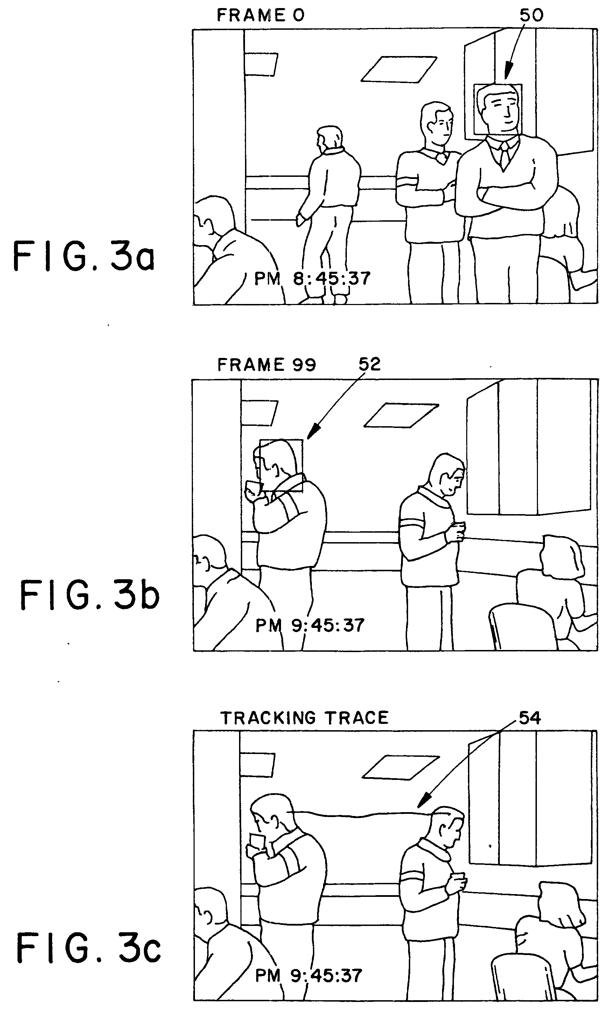

With reference to FIGURES 3a-3c, the first video dynamic lens, comprising a tracking lens, is described. The purpose of the tracking lens is to trace movement over a sequence of image frames through the playing of the video document. The lens has to process the pixel data of the image frames to estimate motion for an underlying structure identified in the lens window. In effect, the lens will go from frame to frame tracking an identifiable common structure as best it can. FIGURES 3a and 3b illustrate a first type of tracking lens in which a lens window **50**, set on the head of a first person, tracks the person's head from frame zero across the room to position **52**, such as shown in frame 99. In this case the window effectively moves with the designated underlying structure through the sequence of image frames. FIGURE 3c leaves a tracking trace line **54** across the image to make a record of the movement of the designated structure. There are two possible uses of this "trace" feature. The first is for a concise, single frame, synopsis of a motion in a sequence of images. For example, in a biological research scenario, one might be interested in the motion of a group of microscopic organisms. A tracking lens could be placed on each organism at the start of the sequence and then the motion can be tracked, leaving different colored tracings. The motion of the entire sequence can be captured in a single frame containing the various traces. Another application of the trace feature would be to preprocess and store information about the motion in a video database. One could match two traces, and this trace representation could be used for indexing into a video database.

Since a tracking lens needs to follow the moving elements covered by the lens over time, the lens needs to know the motion explicitly. Generally to compute the underlying motion structure, one can assume a motion model to be one of three types of models:

a constant velocity model, where all points in the region have the same velocity;
an affine motion model, where image velocity fields can be approximated by a linear (affine) transformation:

$$u(x,y) = a_1 + a_2 x + a_3 y \tag{1}$$

$$v(x,y) = a_4 + a_5 x + a_6 y \tag{2}$$

where $u$, $v$ correspond to components of velocity along horizontal and vertical directions; $x,y$ represent the position of a point in the image; and $a_i$ are affine parameters; and, a planar motion model, where assuming all the points are in a plane, their motion can be formulated as:

$$u(x,y) = a_1 + a_2 x + a_7 x^2 + a_8 xy \tag{3}$$

$$v(x,y) = a_4 + a_5 x + a_6 y + a_7 xy + a_8 y_2 \tag{4}$$

The present invention describes two approaches for solving all the motion models.

The correlation method is a simple method to compute the constant velocity model in a region. The goal of the correlation-based matching is to find the best match between two regions. One region (correlation window) is in the first image, the other region is a corresponding window around the candidate match in the second image. It can be expressed as the minimization of the match error:

$$\xi(u,v) = \sum_{(x,y) \in R} p(I(x,y,t) - I(x + u\delta t, y + v\delta t, t + \delta t)) \tag{5}$$

where $[u, v]$ is the displacement, $R$ stands for correlation window, $p(x) = x^2$ is the estimator, $I$ is the brightness function. The height of the *correlation surface* corresponds to the match error of a certain displacement. The best match is the minimization of the correlation surface.

The area-based regression method assumes that image velocity in a region can be fit by a parameterized motion model, e.g., affine or planar motion. The subject invention implements this by minimizing an error function based on the optical flow constrain equation:

$$E(u,v) = \min_{\vec{a}} \sum_{(x,y) \in R} p(I_x(x,y) u(x,y,\vec{a}) + I_y(x,y) v(x,y,\vec{a}) + I_t(x,y)). \tag{6}$$

where $I_x$, $I_y$, $I_t$ stand for partial derivatives of the image brightness with respect to $x$, $y$, and t and $u$, $v$ can be expressed by equation 1 and 2 (or equation 3 and 4). If $p(x) = x^2$, the standard least square regression method can solve the minimization problem, and recover the motion model.

All of the foregoing models and computational methods are implemented in software architecture processors for processing the source data signals to compute and estimate the underlying structure motion between frames.

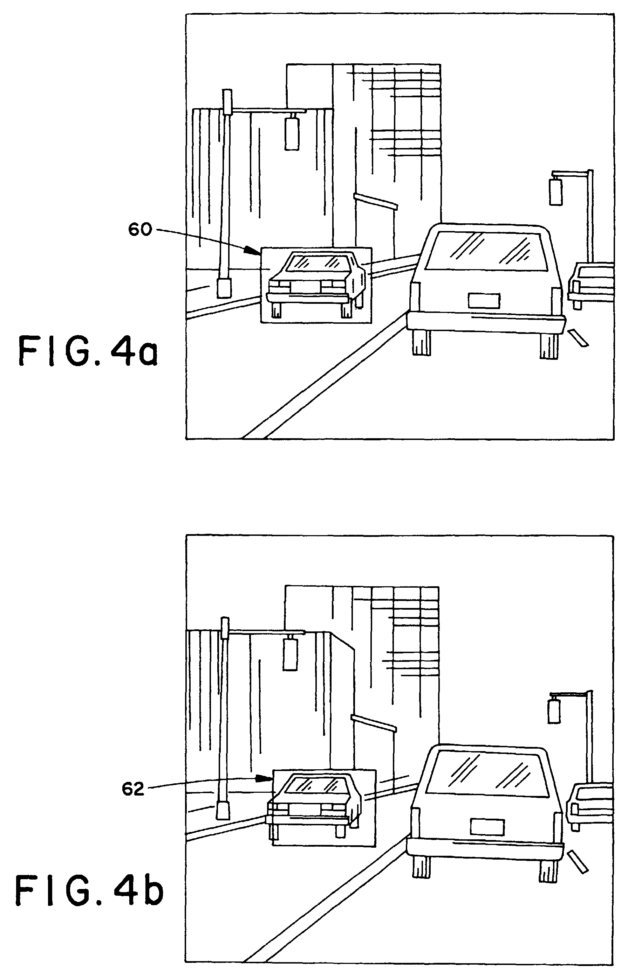

With reference to FIGURE 4, the effect of the stabilizing lens is illustrated. The vehicle in the windows **60, 72** is moved from being completely within the window in FIGURE 4a to being slightly without the window in FIGURE 4b. The stabilizing lens will identify this motion and restore the vehicle within the window **60** to the position and size as shown in FIGURE 4a throughout the entire sequence of the video document.

A stabilizing lens is useful in the case that a user wants to analyze a moving element of the scene, and it is helpful if the region of interest can be stabilized. Motion estimation and image warping are two phases for stabilizing a region between a pair of images.

Image warping deals with the geometric transformation of digital images. Given a *spatial transformation* - a mapping function that establishes a spatial correspondence between all points in the input and output images - each point in the output assumes the value of its corresponding point in the input image. This spatial transformation may be an affine or polynomial transformation, which can be recovered in the motion estimation phase. For example, the affine spatial transformation from equations 1 and 2 can be written:

$$x^* = x + u(x,y) = a_1 + (a_2 + 1)x + a_3 y, \tag{7}$$

$$y^* = y + v(x,y) = a_4 + a_5 x + (a_6 + 1)y, \tag{8}$$

where $x^*$, $y^*$ correspond to the output point; $x$, $y$ represent the input point; and $a_i$ are affine parameters covered in region *R*.

Since *pixels* are defined only at integer positions, an *interpolation*, or *image reconstruction*, state is introduced to fit a continuous surface through the input data. The continuous surface may then be sampled at the output positions. Thus, a warped image with stabilized region *R* is computed by sampling the second image at transformed position *x\**, *y\**. If the spatial transformation corresponds to the motion from one frame to the next, then warping the second frame backwards by the computed motion "undoes the effect of the motion." When comparing the first image with the warped image, region *R* does not move.

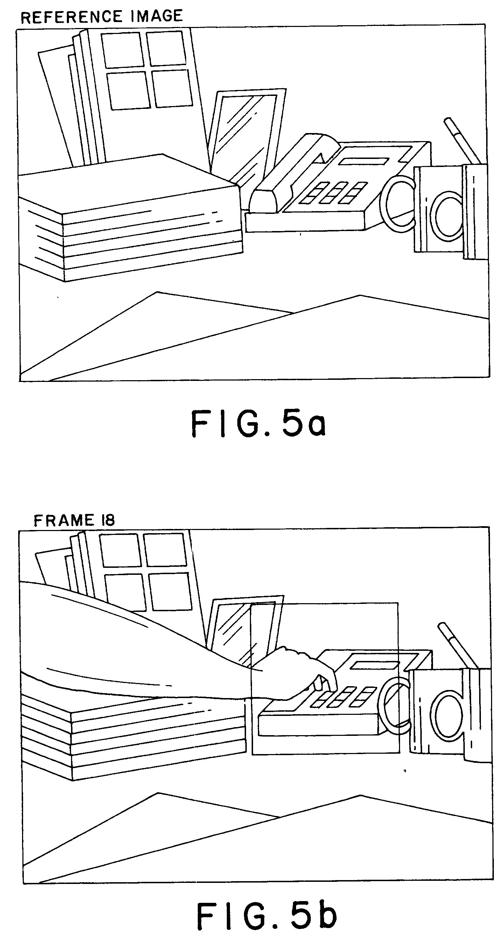

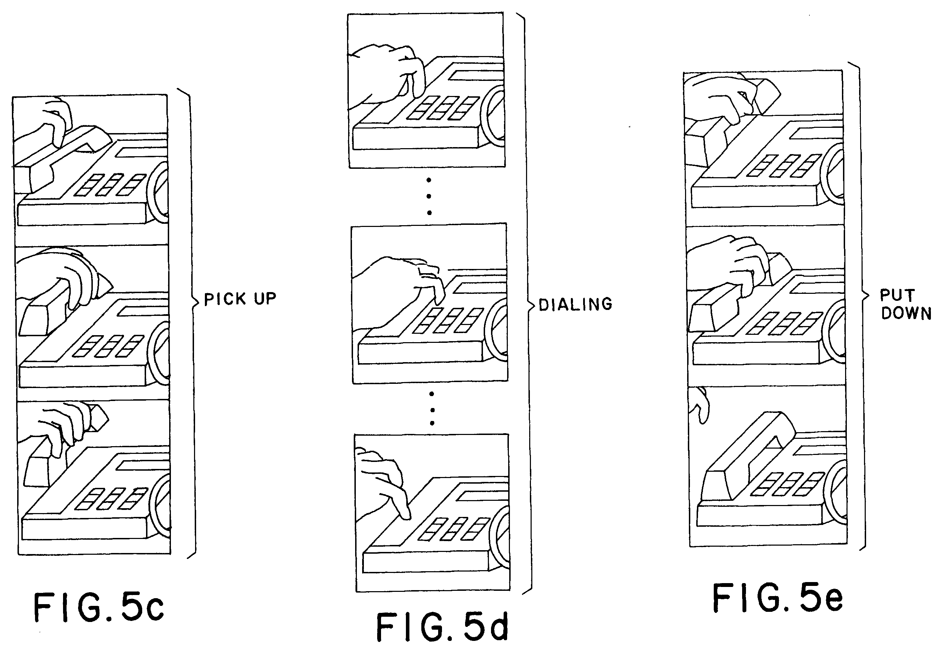

With reference to FIGURES 5a-5e, the effect of a temporal filtering lens is discussed. Traditional lenses filter the image spatially. With a temporal difference filter, one can define many other temporal filters, including temporal average and temporal median filtering. A temporal difference filter can be used to perform simple change detection tasks, while the temporal median filter is able to obtain background images from video sequences that contain small moving objects.

Temporal filters can also be used to filter out, or remove, frames from a video sequence; that is, automatic video editing. A simple example using a temporal difference filter is a change detection lens. When videotaping a scene for a long period of time, the user may only be interested in some particular motion events in a region. For example, open a drawer, push a button, enter a room, turn around, pick up the telephone, etc. A temporal filter can be used to only show the user those frames in which the motion events of interest take place.

FIGURES 5a-5e illustrate the implementation of automatic video editing. A person occasionally makes phone calls in a long video sequence (FIGURE 5a). A change detecting lens (FIGURE 5b) was placed to cover the telephone region. Changes were detected by subtracting the differences in pixel data between two frames. The user can set a threshold on the amount of change necessary to indicate the event. An edited sequence was automatically generated but contained only the frames in which change actually occurred.

A particular advantage of the subject invention is that various filters can be combined to effect the spatial composition of the video sequence. In particular, standard static filters can be combined with dynamic lenses. For example, if the operator were only interested in the edges of a person's head, an edge detecting lens could be placed on top of a tracking lens and, by grouping the lenses, both lenses will be moved simultaneously. Such composition applies to other static lenses, such as magnification, smoothing, etc.

Another application of tracking in composition is the addition of graphics to a video sequence. For example, for a video sequence of a large truck, the planar motion of the side of the truck can be tracked using a tracking lens for planar surfaces. It is also possible to have a transparent window with a predetermined logo (e.g., "XEROX") written in it. The tracking and graphics lenses could be combined so that the XEROX logo tracks and deforms in such a way so as to appear actually on the side of the truck.

Composing with a stabilization lens is advantageous in particular with a magnifying lens. For example, with reference to FIGURES 4a and 4b, a small pedestrian walking across the street could be stabilized and magnified by enlarging the region of the scene.

Another advantageous use of a stabilizing composition is with regard to implementation of a "hyper acuity" lens. Given a stabilized sequence, one has multiple registered views of the region. From these multiple views one can reconstruct a higher resolution view within the region.

Other uses of video lenses relate to visualization of the motion in the video sequence. More flexible models of image motion can be implemented based upon regularization rather than parameterized models. The regularized motion models produce an optical field that contains a motion vector at each pixel indicating the motion of that pixel. Various lenses could be used to examine this motion field. For example, one could place an "optical flow" lens on a particular region of the image and see a vector field corresponding to the image motion. Other lenses can be placed on top of this lens to filter out pixels with particular motions (e.g., filters on speed and orientation) or to pseudo-color the motion field.

The subject invention comprises taking simple and robust estimation tools that are implemented in software to produce useful tools for editing, viewing and manipulating video documents.

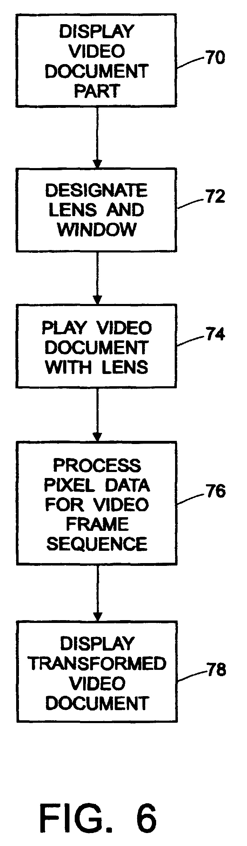

With reference to FIGURE 6, a flow chart illustrating typical software implementation of the subject invention is illustrated. The various processing steps are implemented by software modules in the user interface **14**. At step **70**, part of the video document is displayed such as is shown in FIGURE 2. A particular window **44**, is designated **72** as the window for the video document and a particular lens from the list of lenses **38** is identified as the lens of that window. The parameter control for the lens is designated with the controller window **40**. After application of the lens to the document, the document is played **74** and the digital signal derived from the video document source **10** is processed **76** by the selected lenses from the lens list **12**, through the interface **14** to be transformed **78** for ultimate display on the screen **20**.

The invention has been described with reference to the preferred embodiments. Obviously, modifications and alterations will occur to others upon a reading and understanding of the specification. It is our intention to include all such modifications and alterations insofar as they come within the scope of the appended claims, or the equivalents thereof.

## Claims

1. An image processing system for a video document comprised of a sequence of image frames including representations of relative item movement, for selective processing of the item movement in accordance with a dynamic processing lens, the system comprising:

 a storage device for holding the image frames;
 a display device for displaying the image frames to an operator;
 a lens manager interposed between the storage device and the display device including the dynamic processing lens; and,
 a user interface for selection of the dynamic processing lens and application thereof to the image frames,
 wherein the processing lens includes a motion information processor sensitive to a user designated characteristic associated with the item movement through the sequence of image frames and said motion information processor transforms pixel data of the user designated characteristic for varying the displaying of the characteristic through the sequence of image frames in accordance with the user selection.

2. The image processing system as defined in claim 1 wherein the lens manager further includes a static lens.

3. The image processing system as defined in claim 1 wherein the dynamic processing lens includes a tracking lens, a stabilization lens and a temporal filtering lens.

4. The image processing system as defined in claim 3 wherein the tracking lens comprises means for moving a designated window in association with the item movement.

5. The image processing system as defined in claim 3 wherein the tracking lens comprises means for displaying a trace line corresponding to the item movement.

6. The image processing system as defined in claim 1 wherein the motion information processor includes a constant velocity model processor, an affine motion model processor and a planar motion model processor.

7. The image processing system as defined in claim 6 wherein the constant velocity model processor includes a correlation method processor.

8. The image processing system as defined in claim 6 wherein the affine motion model processor and the planar motion model processor include an area-based regression method processor.

9. A method of processing a sequence of data frames by reference to an identifiable content in the data frames exhibiting a relative movement through the sequence, for transforming the identifiable content with a processing lens throughout a display of the sequence, comprising steps of:

 displaying a first part of the sequence on a display device as a scene display;
 designating a selected portion of the scene display containing the identifiable content as a subject for the processing lens;
 designating the processing lens for the selected portion;
 playing a remaining part of the sequence on the display;
 processing pixel data comprising the identifiable content with the processing lens, including identifying and compensating for the relative movement between the selected portion and an other portion of the scene display outside of the selected portion; and,
 adjusting the display of the sequence in accordance with the processing lens.

10. The method as claimed in claim 9 wherein the selected portion comprises a user designated window and the processing pixel data includes varying a position of the window within the scene display for the compensating of the relative movement.

*STATIC LENS*

MAGNIFY

ENHANCE

*DYNAMIC LENS*

STABLIZING

TRACKING

DISPLAY SCREEN

USER INTERFACE

MOUSE INPUTS

CAMERA VCR DIGITAL (ATM)

20

14

16

10

12

FIG. 1

EP 0 938 062 A2

FIG. 2

FRAME 0                    50

FIG. 3a

PM 8:45:37

FRAME 99      52

FIG. 3b

PM 9:45:37

TRACKING TRACE            54

FIG. 3c

PM 9:45:37

FIG.4a

FIG.4b

REFERENCE IMAGE

# FIG. 5a

FRAME 18

# FIG. 5b

FIG.5e

PUT DOWN

FIG.5d

DIALING

FIG.5c

PICK UP

```
┌─────────────────┐
│     DISPLAY     │
│     VIDEO       │
│   DOCUMENT      │───70
│     PART        │
└─────────────────┘
         │
         ▼
┌─────────────────┐
│   DESIGNATE     │
│   LENS AND      │───72
│    WINDOW       │
└─────────────────┘
         │
         ▼
┌─────────────────┐
│   PLAY VIDEO    │
│   DOCUMENT      │───74
│   WITH LENS     │
└─────────────────┘
         │
         ▼
┌─────────────────┐
│    PROCESS      │
│   PIXEL DATA    │
│   FOR VIDEO     │───76
│     FRAME       │
│   SEQUENCE      │
└─────────────────┘
         │
         ▼
┌─────────────────┐
│    DISPLAY      │
│  TRANSFORMED    │───78
│    VIDEO        │
│   DOCUMENT      │
└─────────────────┘
```

# FIG. 6